# EUROPEAN PATENT SPECIFICATION

(11) **EP 2 396 364 B1**
(45) Date of publication and mention of the grant of the patent: **05.08.2015**
(21) Application number: 10705224.3
(22) Date of filing: 09.02.2010
(51) Int. Cl.: C08G 65/00

(54) **LOW MOLECULAR WEIGHT HALOGENATED AROMATIC POLYMERS AND THEIR USE AS FLAME RETARDANTS**
HALOGENIERTE AROMATISCHE POLYMERE MIT NIEDRIGEM MOLEKULARGEWICHT UND IHRE VERWENDUNG ALS FLAMMHEMMER
POLYMÈRES AROMATIQUES HALOGÉNÉS DE FAIBLE POIDS MOLÉCULAIRE ET LEUR UTILISATION COMME IGNIFUGES

(30) Priority: 13.02.2009 US 152308 P
(43) Date of publication of application: 21.12.2011
(73) Proprietor: Chemtura Corporation, Middlebury, CT 06749 (US)
(72) Inventor: TIMBERLAKE, Larry, West Lafayette IN 47906 (US); SIEBECKER, James, D., West Lafayette IN 47906 (US)
(74) Representative: Beacham, Annabel Rose
(86) International application number: PCT/US2010/023559
(87) International publication number: WO 2010/093600

(56) References cited:
- EP-A1- 0 018 632
- EP-A1- 0 511 565
- WO-A1-2008/154453
- US-A- 3 609 190
- US-A- 3 833 674
- US-A- 3 835 089
- US-A- 4 619 961
- US-A- 4 692 490
- KENJI MIYATAKE ET AL: "NOVEL SYNTHESIS OF LINEAR PERFLUORINATED POLY(PHENYLENE SULFIDE) FROM ARYL SULFOXIDE" MACROMOLECULES, vol. 31, 27 January 1998 (1998-01-27), pages 403-407, XP002581860

## Description

### FIELD

This invention relates to low molecular weight halogenated aromatic polymers and their use as flame retardants.

### BACKGROUND

Decabromodiphenyl oxide (deca) and decabromodiphenylethane (deca-DPE) are commercially available materials widely used to flame retard various polymer resin systems. The structure of these materials is as follows:

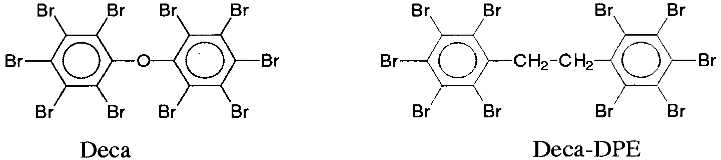

One of the advantages of using deca and deca-DPE in polymer resins that are difficult to flame retard, such as high-impact polystyrene (HIPS) and polyolefins, is that the materials have a very high (82-83%) bromine content. This allows a lower load level in the overall formulation, which in turn serves to minimize any negative effects of the flame retardant on the mechanical properties of the polymer.

Despite the commercial success of deca, there remains significant interest in developing alternative halogenated flame retardant materials that are equally or more efficient, not only because of economic pressures but also because they may allow lower flame retardant loadings, which in turn may impart improved performance properties. Improved properties, such as non-blooming formulations, or better mechanical properties can potentially be met by producing polymeric or oligomeric flame retardant compounds. These types of materials tend become entangled in the base resin polymer matrix, depending on the compatibility between the resin and the flame retardant, and hence should show fewer tendencies to bloom.

There are a number of commercially available flame retardant materials that can be considered oligomers or polymers of halogenated monomers. Examples of these monomers include tetrabromobisphenol A (TBBPA) and dibromostyrene (DBS), which have the following structures:

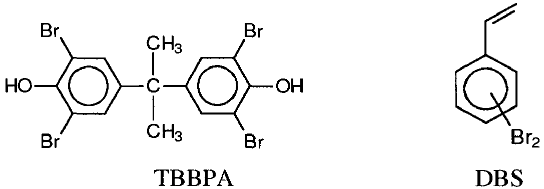

Commercially, TBBPA and DBS are typically not used in their monomeric form, but are converted into an oligomeric or polymeric species. One class of oligomers is the brominated carbonate oligomers based on TBBPA. These are commercially available from Chemtura Corporation (examples include Great Lakes BC-52^{™}, Great Lakes BC-52HP^{™}, and Great Lakes BC-58^{™}) and by Teijin Chemical (FireGuard 7500 and FireGuard 8500). These products are used primarily as flame retardants for polycarbonate and polyesters.

Brominated epoxy oligomers, based on condensation of TBBPA and epichlorohydrin, are commercially available and sold by Dainippon Ink and Chemicals under the Epiclon® series, and also by ICL Industrial Products (examples are F-2016 and F-2100) and other suppliers. The brominated epoxy oligomers find use as flame retardants for various thermoplastics both alone and in blends with other flame retardants.

Another class of brominated polymeric flame retardants based on TBBPA is exemplified by Teijin FG-3000, a copolymer of TBBPA and 1,2-dibromoethane. This aralkyl ether finds use in ABS and other styrenic polymers. Alternative end-groups, such as aryl or methoxy, on this polymer are also known as exemplified by materials described in US 4,258,175 and US 5,530,044. The non-reactive end-groups are claimed to improve the thermal stability of the flame retardant.

TBBPA is also converted into many other different types of epoxy resin copolymer oligomers by chain-extension reactions with other difunctional epoxy resin compounds, for example, by reaction with the diglycidylether of bisphenol A. Typical examples of these types of epoxy resin products are D.E.R.^{™} 539 by the Dow Chemical Company, or Epon^{™} 828 by Hexion Corporation. These products are used mainly in the manufacture of printed circuit boards.

DBS is made for captive use by Chemtura Corporation and is sold as several different polymeric species (Great Lakes PDBS-80^{™}, Great Lakes PBS-64HW^{™}, and Firemaster CP44-HF^{™}) to make poly(bromostyrene) type flame retardants. These materials represent homopolymers or copolymers. Additionally, similar brominated polystyrene type flame retardants are commercially available from Albemarle Chemical Corporation (Saytex® HP-3010, Saytex® HP-7010, and PyroChek 68PB). All these polymeric products are used to flame retard thermoplastics such as polyamides and polyesters.

Unfortunately, one of the key drawbacks of the existing halogenated polymer materials is their relatively low halogen content, which makes them less efficient as flame retardants and consequently typically has a negative effect on the desirable physical properties of the flame retardant formulations containing them, such as impact strength. For example, whereas deca and deca-DPE contain 82-83% bromine, oligomers or polymers based on the brominated monomers mentioned above generally have a bromine content in the range of 52% - 68%, depending on the material. This therefore typically requires a flame retardant loading level in a polymer formulation significantly higher than that required for deca, often resulting in inferior mechanical properties for the formulation.

In our U.S. Patent Application Publication No. 2008/0269416, we have proposed a new class of flame retardant materials that to not detract from the mechanical properties of the target resin and that are based on halogenated aryl ether oligomers comprising the following repeating monomeric units: 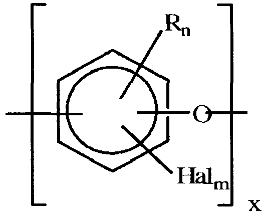 wherein R is hydrogen or alkyl, especially C₁ to C₄ alkyl, Hal is halogen, normally bromine, m is at least 1, n is 0 to 3 and x is at least 2, such as 3 to 100,000. These materials can be halogenated to a higher level than other currently available oligomeric flame retardants and provide superior mechanical properties when combined with resins such as HIPS and polyolefins as well as engineering thermoplastics such as polyamides and polyesters. It is also found that these aryl ether oligomers, even at lower levels of halogenation, give formulations with acceptable mechanical properties.

Similarly, International Patent Publication No. WO 2008/154453 discloses a flame retardant composition comprising a brominated anionic, chain transfer, vinyl aromatic polymer having the basic structure:

Ar-CRH[-CH₂CH(Ar)]n_{average-}CH₂CH₂-Ar

wherein Ar is an aryl group, R is a C1-C4 alkyl group and n_{average} is average number of repeating units and wherein the composition (i) contains at least about 72 wt% bromine, and (ii) contains less than 1000 ppm (weight/weight) thermally labile bromine, the wt% and ppm values being based on the total weight of the composition.

The materials disclosed in the '416 and '453 publications are polymeric in the sense that they have a molecular weight distribution resulting from the varying degrees of polymerization of the monomer units. In contrast, Japanese Unexamined Patent Application Publication 2-129,137 discloses a flame retardant polymer compositions in which the polymer is compounded with a halogenated bis(4-phenoxyphenyl)ether shown by the general formula below: 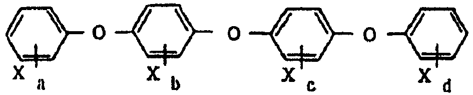 in which X is a halogen atom, a and d are numbers in the range of 1-5, and b and c are numbers in the range of 1-4. However, the flame retardant is produced by brominating the bis(4-phenoxyphenyl)ether as a discrete compound and not a polymeric material having a molecular weight distribution obtained by polymerizing an aryl ether monomer.

A similar flame retardant is disclosed in U.S. Patent No. 3,760,003 which is directed to halogenated phenyl ethers having the general formula: 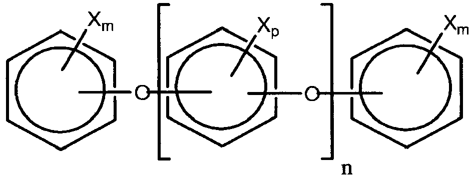 wherein each X is independently Cl or Br, each m is independently an integer of 0 to 5, each p is independently an integer of 0 to 4, n is an integer of 2 to 4, and 50% or more by weight of the compound is halogen.

We have now discovered a new class of halogenated aromatic polymers which have potential use as flame retardant materials for a variety of plastic resins. The base polymers commonly exist at molecular weights greater than 10,000 but, at lower molecular weights, the halogenated versions of these materials can not only be used as flame retardants, but also give the added advantage of being easier to process, having reduced viscosity, and having lower melt or glass transition temperature ranges. This may give added performance properties to the target resin system requiring flame retardancy.

### SUMMARY

In one aspect, the invention resides in a halogenated aromatic polymer according to claim 1.

Conveniently, each of Ar¹, Ar² and Ar³ is selected from aryl, naphthyl, biphenyl, isopropylidenediaryl, methylenediaryl and sulfonyldiaryl and preferably is selected from phenyl, monoalkyl-substituted phenyl and dialkyl-substituted phenyl.

Conveniently, the halogen content of the polymer is in the range of about 35 to about 82 wt%, especially about 50 to about 80 wt%. Generally the halogen is bromine.

In one embodiment, said polymer is a homopolymer of said monomer units having the formula (I). In another embodiment, said polymer is a block or random copolymer of said monomer units having the formula (I) and a different comonomer unit, preferably also having said formula (I).

In another aspect, the invention resides in a halogenated aromatic polymer according to claim 2.

In one embodiment, said polymer is a homopolymer of said monomer units having the formula (II). In another embodiment, said polymer is a block or random copolymer of said monomer units having the formula (II) and a different comonomer unit, preferably also having said formula (II).

In a further aspect, the invention resides in a flame retardant polymer composition comprising (a) a flammable macromolecular material and (b) a flame retardant comprising the present halogenated aromatic polymer according to claim 1 or 2.

Conveniently, the flammable macromolecular material (a) is a styrene-based polymer and the amount of flame retardant blend in the composition is between about 5 and about 25 wt%.

Conveniently, the flammable macromolecular material (a) is a propylene-based polymer and the amount of flame retardant blend in the composition is between about 20 and about 50 wt%.

Conveniently, the flammable macromolecular material (a) is polyethylene and the amount of flame retardant blend in the composition is between about 5 and about 35 wt%.

Conveniently, the flammable macromolecular material (a) is a polyamide or polyester and the amount of flame retardant blend in the composition is between about 5 and about 25 wt%.

The halogenated aromatic polymers described herein can be homopolymers in which substantially all the monomer units have the formula (I) and (II). Alternatively, the polymers can be block or random copolymers of monomer units having the formula (I) or (II) with different comonomer units, preferably also having said formula (I) or (II). Conveniently, the polymers have a halogen content in the range of about 35 to about 82 wt%, especially about 50 to about 80 wt%, with the halogen generally being bromine. Typically, the polymers have a molecular weight between about 500 and about 30,000 Daltons, preferably between about 500 and about 5,000 Daltons.

The present halogenated aromatic polymers are conveniently produced by halogenation, normally bromination, of the associated aromatic polymer precursor, which can in turn be made by methods known in the art.

Bromination of the aromatic polymer precursor is readily achieved by the reaction of the precursor with bromine in the presence of a Lewis acid catalyst, such as aluminum chloride. Depending on the amount of bromine desired to be introduced into the polymer, the weight ratio of bromine to precursor employed in the bromination reaction is typically between about 1:1 and about 100:1, such as between about 3:1 and about 20:1. The final brominated polymer is generally arranged to have at least one, and typically between 2 and 4 bromine atoms per aromatic group.

Alternatively, bromine chloride may be used as the brominating agent to generate the desired product in similar fashion. In this case, a small amount of organically-bound chlorine would also be present, but would not detract from the properties of the final flame retardant.

The resultant halogenated aromatic polymers can be used as flame retardants for many different polymer resin systems because of their high thermal stability and also because of their relatively high halogen content compared with existing polymeric flame retardant products. Generally, the halogenated aromatic polymers are employed as flame retardants for thermoplastic polymers, such as polystyrene, high-impact polystyrene (HIPS), poly (acrylonitrile butadiene styrene) (ABS), polycarbonates (PC), PC-ABS blends, polyolefins (such as propylene homopolymers and copolymers and polyethylene), polyesters and/or polyamides. With such polymers, the level of the halogenated aromatic polymer in the polymer formulation required to give a V-0 classification when subjected to the flammability test protocol from Underwriters Laboratories is generally within the following ranges:

| Polymer | Useful | Preferred |
|---|---|---|
| Styrene-based | 5 to 25 wt% | 10 to 20 wt% |
| Propylene-based | 20 to 50 wt% | 25 to 40 wt% |
| Polyethylene | 5 to 35 wt% | 20 to 30 wt% |
| Polyamide | 5 to 25 wt% | 10 to 20 wt% |
| Polyester | 5 to 25 wt% | 10 to 20 wt%. |

The present halogenated aromatic polymers can also be used with thermosetting polymers, such as epoxy resins, unsaturated polyesters, polyurethanes and/or rubbers. Where the base polymer is a thermosetting polymer, a suitable flammability-reducing amount of the halogenated aromatic polymer is between about 5 wt% and about 35 wt%, such as between about 10wt% and about 25 wt%.

Typical applications for polymer formulations containing the present halogenated aromatic polymers as a flame retardant include automotive molded components, adhesives and sealants, fabric back coatings, electrical wire and cable jacketing, and electrical and electronic housings, components and connectors. In the area of building and construction, typical uses for the present flame retardant include self extinguishing polyfilms, wire jacketing for wire and cable, backcoating in carpeting and fabric including wall treatments, wood and other natural fiber-filled structural components, roofing materials including roofing membranes, roofing composite materials, and adhesives used to in construction of composite materials. In general consumer products, the present flame retardant can be used in formulation of appliance parts, housings and components for both attended and unattended appliances where flammability requirements demand.

The invention will now be more particularly described with reference to the following Examples.

### Example 1 (Comparative)

40.0 g of polyphenylene oxide (molecular weight 8000) is dissolved in 600 ml 1,2-dichloroethane. Iron catalyst (4.0g) is added and the mixture is heated to 40°C. Bromine (128.0g) is added dropwise over a period of 1.25 hr. Reaction temperature is increased to 60°C and mixture is maintained at that temperature for an additional 1 hr. The bulk of 1,2-dichloroethane is removed by distillation and the product is precipitated by addition of 600 ml methanol. The solid brominated polyphenylene oxide product is filtered, washed with additional methanol, and dried. Product of the bromination (52.0g) has a bromine content of 57.0%.

### Example 2 (Comparative)

The product of Example 1 is compounded into high-impact polystyrene (Nova 5511). The composition is 20.6% Br-PPO, 3.5% antimony trioxide, 0.2% stabilizer (Anox PP-18), 5% impact modifier (Kraton D1101), and the remainder Nova 5511. The formulation gives UL-94 V-0.

### Example 3 (Comparative)

The product of Example 1 is compounded into polypropylene (Alathon H5520). The composition is 27.9% Br-PPO, 6.3% antimony trioxide, and the remainder polypropylene. The formulation gave UL-94 V-2.

### Example 4

An oligomer is prepared by reaction of diphenyl oxide (140.8g) with 1,2-dibromoethane (77.3g) in the presence of an aluminum chloride catalyst (1.4g). The ingredients are charged to a reaction flask and heated to 128°C and held for 3 hours at which time HBr evolution has ceased. The crude oligomer is dissolved in methylene chloride solvent, washed with aqueous NaOH and water, and volatiles are removed by flash distillation. The base oligomer (93.3g) has a molecular weight of 1060.

### Example 5

The oligomeric product (40.0g) of Example 4 is brominated with molecular bromine (390g) in the presence of aluminum chloride catalyst (3.2g) using 1,2-dichloroethane (500ml) as solvent. The brominated oligomer is recovered by adding the reaction mixture gradually to hot water and flashing off 1,2-dichloroethane. The product is filtered and dried. The brominated diphenylethane oligomer (134.2g) has bromine content 77.2%.

### Example 6

The product of Example 5 is compounded into high-impact polystyrene. The composition is 15% brominated diphenyloxide-ethane oligomer, 3.5% antimony trioxide, 0.2% stabilizer (Anox PP-18), 5% impact modifier (Kraton D1101), and the remainder high-impact polystyrene (Nova 5511). The formulation gives UL-94 V-0 with an Izod notched impact of 2.0 ft-lb/in.

### Example 7

A brominated carbonate oligomer is prepared from 4-4'-octabromobiphenyl, tribromophenol, and phosgene via the interfacial process. The product has a bromine content 74%.

While the present invention has been described and illustrated by reference to particular embodiments, those of ordinary skill in the art will appreciate that the invention lends itself to variations not necessarily illustrated herein. For this reason, then, reference should be made solely to the appended claims for purposes of determining the true scope of the present invention.

## Claims

1. A halogenated aromatic polymer having between 2 and 100 monomer units each comprising an aromatic group substituted with at least one halide group, wherein at least one of said monomer units has the following formula (I):
- Ar¹-A-Ar²-B (I):
wherein Ar¹ and Ar² are the same or different and each is an aromatic group substituted with at least one halide group;
A is a C₁ to C₆ alkyl chain; and B is O.

2. A halogenated aromatic polymer having between 2 and 100 monomer units each comprising an aromatic group substituted with at least one halide group, wherein at least one of said monomer units has the following formula (II):
-Ar¹-A-Ar²-B- (II):
wherein Ar1 and Ar2 are the same or different and each is an aromatic group substituted with at least one halide group;
A is a single bond, and B is CO.

3. The polymer of any preceding claim, wherein each of Ar¹ and Ar² is selected from aryl, naphthyl, biphenyl, isopropylidenediaryl, methylenediaryl and sulfonyldiaryl.

4. The polymer of any preceding claim, wherein each of Ar¹ and Ar² is selected from phenyl, monoalkyl-substituted phenyl and dialkyl-substituted phenyl.

5. The polymer of any preceding claim, wherein in the halogen content of polymer is in the range of 35 to 82 wt%, preferably 50 to 80 wt%.

6. The polymer of any preceding claim, wherein the halogen is bromine.

7. The polymer of any preceding claim and having between 2 and 20 monomer units.

8. A flame retardant polymer composition comprising (a) a flammable macromolecular material and (b) a flame retardant comprising a halogenated aromatic polymer of any preceding claim.

9. The composition of claim 8, wherein the flammable macromolecular material (a) is a styrene-based polymer and the amount of flame retardant in the composition is between 5 and 25 wt%.

10. The composition of claim 8, wherein the flammable macromolecular material (a) is a propylene-based polymer and the amount of flame retardant in the compostion is between 20 and 50 wt%.

11. The composition of claim 8, wherein the flammable macromolecular material (a) is polyethylene and the amount of flame retardant blend in the composition is between 5 and 35 wt%.

12. The compostion of claim 8, wherein the flammable macromolecular material (a) is a polyamide or polyester and the amount of flame retardant blend in the composition is between 5 and 25 wt%.

## Patentansprüche

1. Halogeniertes aromatisches Polymer mit zwischen 2 und 100 Monomereinheiten, die jeweils eine durch mindestens eine Halogenidgruppe substituierte aromatische Gruppe umfassen, wobei mindestens eine der Monomereinheiten die folgende Formel (I) aufweist:
-Ar¹-A-Ar²-B (I):
wobei Ar¹ und Ar² gleich oder verschieden sind und jeweils für eine durch mindestens eine Halogenidgruppe substituierte aromatische Gruppe stehen;
A für eine C₁- bis C₆-Alkylkette steht und B für O steht.

2. Halogeniertes aromatisches Polymer mit zwischen 2 und 100 Monomereinheiten, die jeweils eine durch mindestens eine Halogenidgruppe substituierte aromatische Gruppe umfassen, wobei mindestens eine der Monomereinheiten die folgende Formel (II) aufweist:
-Ar¹-A-Ar²-B- (II):
wobei Ar¹ und Ar² gleich oder verschieden sind und jeweils für eine durch mindestens eine Halogenidgruppe substituierte aromatische Gruppe stehen;
A für eine Einfachbinundg steht und B für CO steht.

3. Polymer nach einem der vorhergehenden Ansprüche, wobei Ar¹ und Ar² jeweils aus Aryl, Naphthyl, Biphenyl, Isopropylidendiaryl, Methylendiaryl und Sulfonyldiaryl ausgewählt sind.

4. Polymer nach einem der vorhergehenden Ansprüche, wobei Ar¹ und Ar² jeweils aus Phenyl, monoalkylsubstituiertem Phenyl und dialkylsubstituiertem Phenyl ausgewählt sind.

5. Polymer nach einem der vorhergehenden Ansprüche, wobei der Halogengehalt des Polymers im Bereich von 35 bis 82 Gew.-% und vorzugsweise 50 bis 80 Gew.-% liegt.

6. Polymer nach einem der vorhergehenden Ansprüche, wobei es sich bei dem Halogen um Brom handelt.

7. Polymer nach einem der vorhergehenden Ansprüche mit zwischen 2 und 20 Monomereinheiten.

8. Flammgeschützte Polymerzusammensetzung, umfassend (a) ein entflammbares makromolekulares Material und (b) ein Flammschutzmittel, umfassend ein halogeniertes aromatisches Polymer nach einem der vorhergehenden Ansprüche.

9. Zusammensetzung nach Anspruch 8, wobei es sich bei dem entflammbaren makromolekularen Material (a) um ein Polymer auf Basis von Styrol handelt und die Menge an Flammschutzmittel in der Zusammensetzung zwischen 5 und 25 Gew.-% liegt.

10. Zusammensetzung nach Anspruch 8, wobei es sich bei dem entflammbaren makromolekularen Material (a) um ein Polymer auf Basis von Propylen handelt und die Menge an Flammschutzmittel in der Zusammensetzung zwischen 20 und 50 Gew.-% liegt.

11. Zusammensetzung nach Anspruch 8, wobei es sich bei dem entflammbaren makromolekularen Material (a) um Polyethylen handelt und die Menge an Flammschutzmittelmischung in der Zusammensetzung zwischen 5 und 35 Gew.-% liegt.

12. Zusammensetzung nach Anspruch 8, wobei es sich bei dem entflammbaren makromolekularen Material (a) um ein Polyamid oder einen Polyester handelt und die Menge an Flammschutzmittelmischung in der Zusammensetzung zwischen 5 und 25 Gew.-% liegt.

## Revendications

1. Polymère aromatique halogéné possédant entre 2 et 100 unités monomères comprenant chacune un groupement aromatique substitué par au moins un groupement halogénure, dans lequel au moins l'une parmi lesdites unités monomères répond à la formule suivante (I) :
-Ar¹-A-Ar²-B (I)
dans laquelle Ar¹ et Ar² sont identiques ou différents et chacun est un groupement aromatique substitué par au moins un groupement halogénure,
A est une chaîne C₁ à C₆ alkyle ; et B est O.

2. Polymère aromatique halogéné possédant entre 2 et 100 unités monomères comprenant chacune un groupement aromatique substitué par au moins un groupement halogénure, dans lequel au moins l'une parmi lesdites unités monomères répond à la formule suivante (II) :
-Ar1-A- Ar2-B- (II)
dans laquelle Ar1 et Ar2 sont identiques ou différents et chacun est un groupement aromatique substitué par au moins un groupement halogénure,
A est une liaison simple ; et B est CO.

3. Polymère selon l'une quelconque des revendications précédentes, dans lequel chacun parmi Ar¹ et Ar² est choisi parmi aryle, naphtyle, biphényle, isopro-pylidènediaryle, méthylènediaryle et sulfonyldiaryle.

4. Polymère selon l'une quelconque des revendications précédentes, dans lequel chacun parmi Ar¹ et Ar² est choisi parmi phényle, phényle substitué par monoalkyle et phényle substitué par dialkyle.

5. Polymère selon l'une quelconque des revendications précédentes, dans lequel la teneur en halogène du polymère se trouve dans la plage allant de 35 à 82% en poids, préférablement de 50 à 80% en poids.

6. Polymère selon l'une quelconque des revendications précédentes, dans lequel l'halogène est le brome.

7. Polymère selon l'une quelconque des revendications précédentes, possédant entre 2 et 20 unités monomères.

8. Composition de polymère ignifuge, comprenant (a) un matériau macromoléculaire inflammable et (b) un ignifuge comprenant un polymère aromatique halogéné selon l'une quelconque des revendications précédentes.

9. Composition selon la revendication 8, dans lequel le matériau macromoléculaire inflammable (a) est un polymère à base de styrène et la quantité d'ignifuge dans la composition est comprise entre 5 et 25% en poids.

10. Composition selon la revendication 8, dans lequel le matériau macromoléculaire inflammable (a) est un polymère à base de propylène et la quantité d'ignifuge dans la composition est comprise entre 20 et 50% en poids.

11. Composition selon la revendication 8, dans lequel le matériau macromoléculaire inflammable (a) est du polyéthylène et la quantité de mélange ignifuge dans la composition est comprise entre 5 et 35% en poids.

12. Composition selon la revendication 8, dans lequel le matériau macromoléculaire inflammable (a) est du polyamide ou du polyester et la quantité de mélange ignifuge dans la composition est comprise entre 5 et 25% en poids.
